(19) Europäisches Patentamt
European Patent Office
Office européen des brevets

(11) **EP 2 146 508 A1**

(12) **EUROPEAN PATENT APPLICATION**

(43) Date of publication:
**20.01.2010 Bulletin 2010/03**

(51) Int Cl.:
***H04N 7/26*** *(2006.01)*

(21) Application number: **09007471.7**

(22) Date of filing: **05.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **15.07.2008 JP 2008184002**

(71) Applicant: **Fujitsu Limited**
**Kawasaki-shi, Kanagawa 211-8588 (JP)**

(72) Inventors:
• **Shimada, Satoshi**
 **Kawasaki-shi**
 **Kanakawa 211-8588 (JP)**

• **Nakagawa, Akira**
 **Kawasaki-shi**
 **Kanakawa 211-8588 (JP)**
• **Kobayashi, Shunsuke**
 **Fukuoka-shi**
 **Fukuoka 814-8588 (JO)**

(74) Representative: **HOFFMANN EITLE**
**Patent- und Rechtsanwälte**
**Arabellastrasse 4**
**81925 München (DE)**

(54) **Image encoding/decoding devices and image band decomposing/composing devices**

(57)    A down-sampler samples down a signal whose low frequency component is cut to 1/2. A sign inversion unit cyclically multiplies the sampled-down high-frequency sub-band signal by a negative value and outputs a sign-inverted high-frequency sub-band signal. Thus, in the frequency characteristic of the high-frequency sub-band signal, the signal power on the low frequency side can be increased.

F I G. 1

**Description**

FIELD

The embodiments discussed herein are related to the encoding/decoding devices and band dividing/composing devices of digital images.

BACKGROUND

A method for dividing an image signal into two or more frequency-band signals and encoding each frequency-band signal is called sub-band encoding. Wavelet transform which has recently attracted people's attention can be considered as a special case of sub-band division.

The sub-band encoding can generate a low resolution image signal from sub-band signal of low frequency band. By composing sub-band signals of low frequency band and high-frequency band, the original high resolution image signal can be generated.

If a highly efficient image encoding method which is currently widely spread is used when encoding a sub-band signal which has been obtained by dividing original signal into respective frequency bands, a low frequency sub-band signal can be decoded even by an existing decoder and at least a low frequency image signal can be obtained. Therefore, the use of an existing image encoding method as a sub-band signal encoding method has a high advantage in compatibility. Currently, JPEG for still images and MPEG series for dynamic images, both being the international standard methods, are the most popular image encoding methods.

In JPEG and MPEG, an image is decomposed into block units and frequency conversion is performed by discrete cosine transform (DCT). This is designed presuming that a frequency characteristic is concentrated on a low frequency component.

However, when a general sub-band division method is used, in the frequency characteristic of a sub-band signal on a high frequency band side, signal power is distributed on a high frequency side. Therefore, compression efficiency deteriorates, which is a problem.

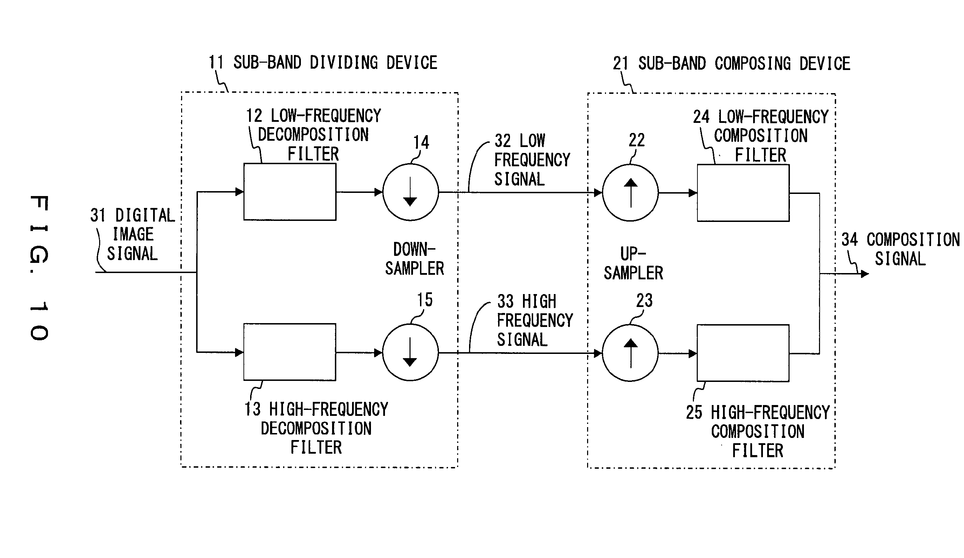

Fig. 10 illustrates conventional sub-band dividing device 11 and sub-band composition device 21. A signal whose band is restricted by the sub-band dividing device 11 is encoded by an encoding unit, which is not illustrated in Fig. 10, and outputted. However, for the purpose of a simple explanation, in the following description, a low frequency signal and a high frequency signal obtained by dividing the band of a signal using the sub-band dividing device 11 are composed by the sub-band composing device 21.

A digital image signal 31 is decomposed into low-frequency and high-frequency signals by the low-frequency decomposition filter 12 and high-frequency decomposition filter 13, respectively, of the sub-band dividing device 11.

A signal whose band is restricted by the low-frequency decomposition filter 12 is sampled down to 1/2 by a down-sampler 14 and is outputted as a low frequency signal 32.

A signal whose band is restricted by the high-frequency decomposition filter 13 is sampled down to 1/2 by a down-sampler 15 and is outputted as a high frequency signal 33.

The up-samplers 22 and 23 of the sub-band composing device 21 sample up the low frequency signal 32 and the high frequency signal 33, respectively, double. Low frequency composition filter 24 and high frequency composition filter 25 compose the sampled-up low frequency and high frequency signals to generate a composition signal 34.

For the above-described low frequency decomposition filter 12, high frequency decomposition filter 13, low frequency composition filter 24 and high frequency composition filter 25, the following filters, such as symmetric short kernel filter (SSKF), a Daubechies wavelet filter and the like, are used. A filter of FIR filters, having a coefficient meeting a condition with which signals can be composed in a prescribed error range even if a signal is decomposed into respective frequency bands, is used.

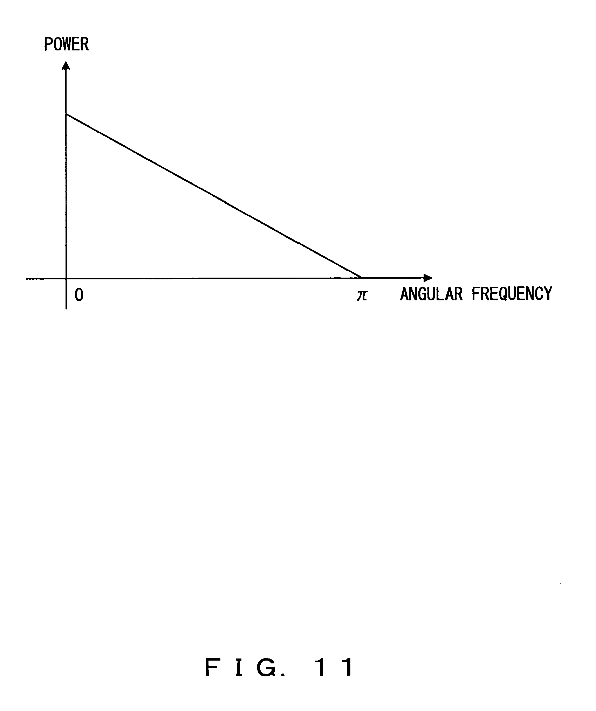

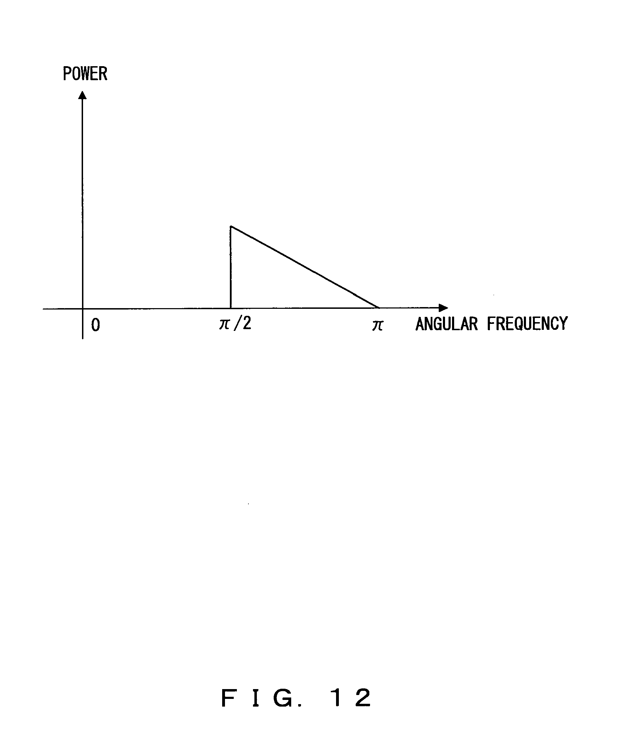

As illustrated in Fig. 11, generally, a digital image signal has a tendency that power is concentrated more on a low frequency bang than on a high frequency side. It is assumed that the low-frequency decomposition filter 12 and the high-frequency decomposition filter 13 which are illustrated in Fig. 10 generate a signal whose band is restricted to a low frequency band and a signal whose band is restricted to a high frequency band, respectively. If, for the purpose of a simple explanation, it is assumed that the high-frequency decomposition filter 13 has an ideal high frequency band-pass characteristic, the frequency characteristic of the output signal of the high-frequency decomposition filter 13 is as illustrated in Fig. 12.

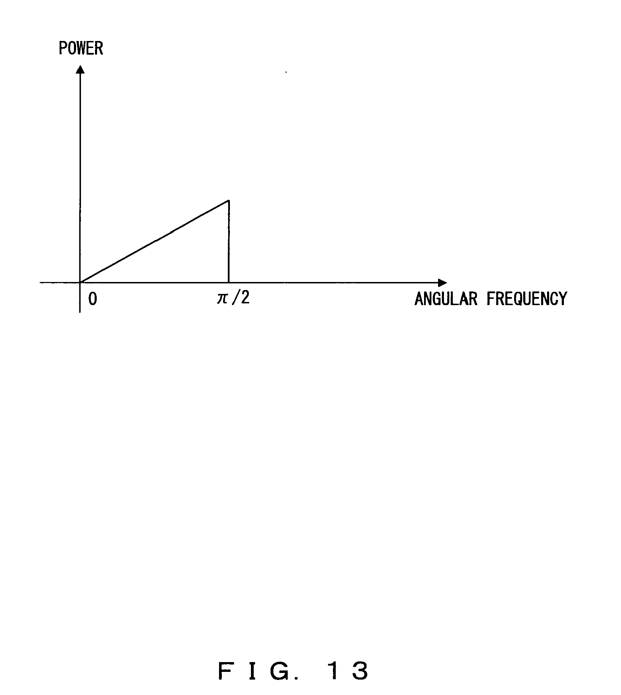

Furthermore, if the output signal of the high- frequency decomposition filter 13 is sampled down to 1/2 by the down-sampler 15, the characteristic is as illustrated in Fig. 13 and the signal power of the high frequency band is higher than the signal power of the low frequency band. Conventionally, since a signal having such a frequency characteristic is encoded by DCT, compression efficiency deteriorates.

In order to solve such a problem, Patent document 1 discloses a technology for improving compression efficiency by adaptively switching the scanning order of a coefficient used when reducing a two or more-dimensional DCT coefficient to one-dimensional DCT coefficient.

However, the method of Patent document 1 cannot use an existing image encoding method, such as JPEG, MPEG and the like. Since in the frequency characteristic of a sub-band signal to be encoded, power is concentrated on a high frequency component, the correlation in the spatial direction of an input signal is low, a spatial prediction method, such as the intra-prediction of the H.264/MPEG-4·AVC of ITU-T, is not suitable, which is a problem.

As another prior art, Patent document 2 discloses a technology for filtering a high-precision television signal by vertical and horizontal filters to generate four types of auxiliary signals. In Patent document 2, the sum of all samples per field of the auxiliary signal is prevented from being the number of samples per field of the high-precision television signal or more.

Patent document 3 discloses a technology for improving the compression efficiency of encoded output by dividing an image into four bands using a band division filter, selecting a station whose conversion coefficient power is estimated to be the highest according to the band type of a target image and scanning zigzag from the station.

Patent document 1: Japanese Laid-open Patent Publication No. H4-369989

Patent document 2: Japanese Laid-open Patent Publication No. H6-343162

Patent document 3: Japanese Laid-open Patent Publication No. H4-326886

SUMMARY

Accordingly, it is an object in one aspect of the invention to decompose an image signal into sub-bands and improve the compression efficiency at the time of encoding.

According to an aspect of the invention, an image encoding device includes a sub-band division unit for dividing a digital image signal into low-frequency and high-frequency sub-band signals, a down-sampling unit for sampling down the low-frequency and high-frequency sub-band signals and a multiplication unit for cyclically multiplying the low-frequency and high-frequency sub-band signals before or after down-sampling by a negative value.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

BRIEF DESCRIPTION of DRAWINGS

Fig. 1 is a configuration of an encoding device in the first preferred embodiment;
Fig. 2 illustrates the frequency characteristic after sign inversion;
Fig. 3 explains signals in the first preferred embodiment;
Fig. 4 is one example of a sign inversion unit;
Fig. 5 is a block diagram of an encoding unit;
Fig. 6 is a flowchart of an encoding process;
Fig. 7 is a configuration of an image decoding device in the second preferred embodiment;
Fig. 8 explains signals in the second preferred embodiment;
Fig. 9 is a block diagram of a decoding unit;
Fig. 10 illustrates a conventional sub-band dividing device and a sub-band composing device;
Fig. 11 illustrates the frequency characteristic of an input image;
Fig. 12 illustrates the frequency characteristics after being decomposed into a high frequency band; and
Fig. 13 illustrates the frequency characteristic after down-sampling.

DESCRIPTION OF EMBODIMENTS

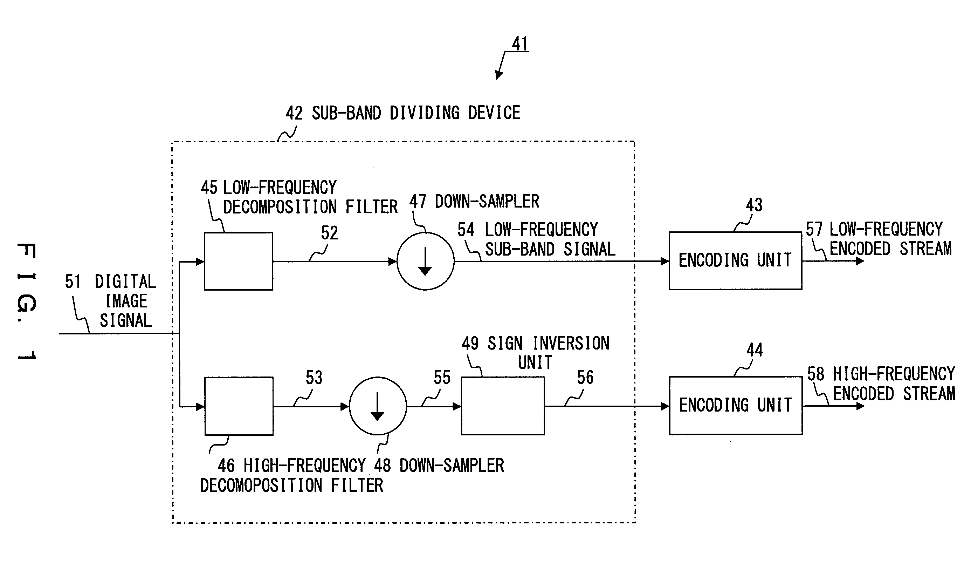

Preferred embodiments of the present invention will be explained below. Fig. 1 is a configuration of an encoding device 41 in the first preferred embodiment.

The image encoding device 41 includes a sub-band dividing device 42 being the embodiment of the image band dividing device and encoding units 43 and 44. The sub-band dividing device 42 includes a low-frequency decomposition filter 45, a high-frequency decomposition filter 46, down-samplers 47 and 48 and a sign determination unit 49.

Each of the low-frequency decomposition filter 45 and the high-frequency decomposition filter 46 restricts the frequency band in the horizontal direction of a digital image signal.

The down-sampler 47 samples down a signal 52 whose high frequency component is cut by the low-frequency decomposition filter 45 to 1/2 and outputs the signal after down-sampling to the encoding unit 43 as a low-frequency sub-band signal 54. The down-sampler 48 samples down a signal 53 whose low frequency component is cut by the high-frequency decomposition filter 46 to 1/2 and outputs the signal after down-sampling to the sign inversion unit 49 as a high-frequency sub-band signal 55.

The sign inversion unit 49 cyclically multiplies the high-frequency sub-band signal 55 by a negative value and outputs the sign-inverted high-frequency sub-band signal 56. For example, when inverting the sign of the signal sampled down to 1/2, it is preferable to multiply the signal by -1 every other sample. The cycle can be determined according to a down-sampling ratio. A value to be multiplied can also be other than -1.

The encoding unit 43 encodes the low-frequency sub-band signal 54 by an encoding method, such as H.264 or the like, and outputs the signal as a low-frequency encoded stream 57. The encoding unit 44 encodes the sign-inverted high-frequency sub-band signal 56 and outputs the signal as a high-frequency encoded stream 58.

Next, the operation of the sign inversion unit 49 is explained. If it is assumed that the sample series x(i) of the sampled-down high-frequency sub-band signal 55 are $x_0$, $x_1$, ... and $x_n$, its z transform can be expressed as follows.

$$X(Z) = x_0 \cdot Z^0 + x_1 \cdot Z^{-1} + x_2 \cdot Z^{-2} + \dots (-1)^n x_n \cdot Z^{-n}$$

The z transform of signal series $y(i)=(-1)^i x(i)$ obtained by multiplying x(i) by -1 every other sample can be expressed by the following expression.

$$Y(Z) = x_0 \cdot Z^0 - x_1 \cdot Z^{-1} + x_2 \cdot Z^{-2} - \dots + (-1)^n x_n \cdot Z^{-n}$$
$$= x_0 \cdot (-1)^0 Z^0 - x_1 \cdot (-1)^{-1} Z^{-1} + x_2 \cdot (-1)^{-2} Z^{-2} - \dots +$$
$$(-1)^n x_n Z^{-n} = X(-Z)$$

If $Z=e^{i\omega}$, X(Z) indicates the discrete Fourier transform F(ω) of x(i) and $F(\omega)=X(e^{i\omega})$.

On the other hand, if $Z=e^{i\omega}$ in X(-Z) which is the z transform of y(i), then $-Z=e^{i(\pi+\omega)}$. Therefore, the discrete Fourier transform of y(i) is F(π+ω).

In the Fourier transform of real number sequence, since the relation of F(π+ω)= F(π-ω) is satisfied as to Nyquist angular frequency π, the frequency characteristic F(π-ω) of y(i) is obtained by inverting the frequency characteristic F(ω) of x(i) in the range of [0, π] of an angular frequency ω. In the embodiment, since a sampling frequency is reduced to 1/2 by the down-sampler 48, the frequency characteristic is inverted in the range of [0, π/2] of the angular frequency ω.

In another words, the frequency characteristic of the output signal y(i) obtained by multiplying x(i) by -1 every other sample can be obtained by inverting the frequency characteristic of the high-frequency sub-band signal 55 (x(i)) in the range of [0, π/2] of the angular frequency ω.

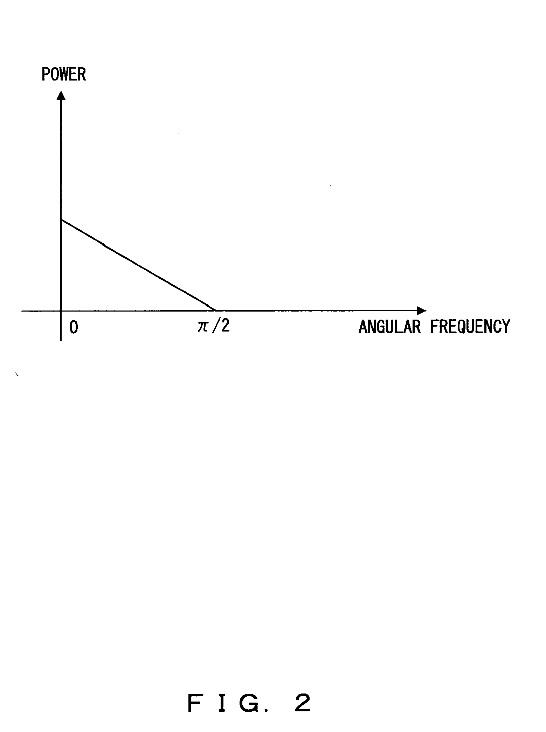

Fig. 2 illustrates the frequency characteristic of the signal 56 obtained by multiplying the high-frequency sub-band signal 55 by -1 every other sample. In Fig. 2, the vertical and horizontal axes indicate signal power and angular frequency, respectively.

As illustrated in Fig. 2, as to the frequency characteristic of the high-frequency sub-band signal after sign inversion, the higher is the frequency, the lower is the signal power. The frequency characteristic illustrated in Fig. 2 is the same as a frequency characteristic obtained by inverting the frequency characteristic of the high-frequency sub-band signal after down-sampling illustrated in Fig. 13.

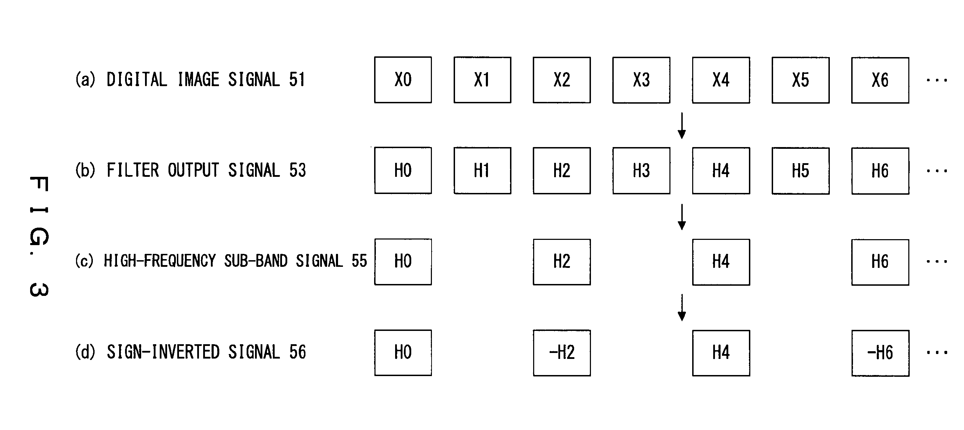

Fig. 3 explains signals in the first preferred embodiment. The row (a) in Fig. 3 indicates a digital image signal 51 inputted to the image encoding device 41. The digital image signals 51 are indicated by X0, X1, X2, X3,....

The row (b) in Fig. 3 indicates the output signal 53 of the high-frequency decomposition filter 46. The output signal 53 of the high-frequency decomposition filter 46 is indicated by H0, H1, H2, H3, ....

The row (c) in Fig. 3 indicates the high-frequency sub-band signal 55 sampled down to 1/2 by the down-sampler 48. The second data H1 and fourth data H3 of the output signal 53 of the high-frequency decomposition filter 46 are thinned out and the 0-th data H0 and the third data H2... are outputted as the high-frequency sub-band signal 55.

The row (d) in Fig. 3 indicates the output signal 56 of the sign inversion unit 49. The numeral -1 is multiplied to the high-frequency sub-band signal 55 by the sign inversion unit 49. As a result, as the 0-th signal H0 of the output signal 56 of the sign inversion unit 49, the 0-th signal H0 of the output signal 53 of the high-frequency decomposition filter 46 is outputted as it is. The second (the second after down-sampling which has been the third originally) signal is -H2. The third and fourth signals become H4 and -H6, respectively.

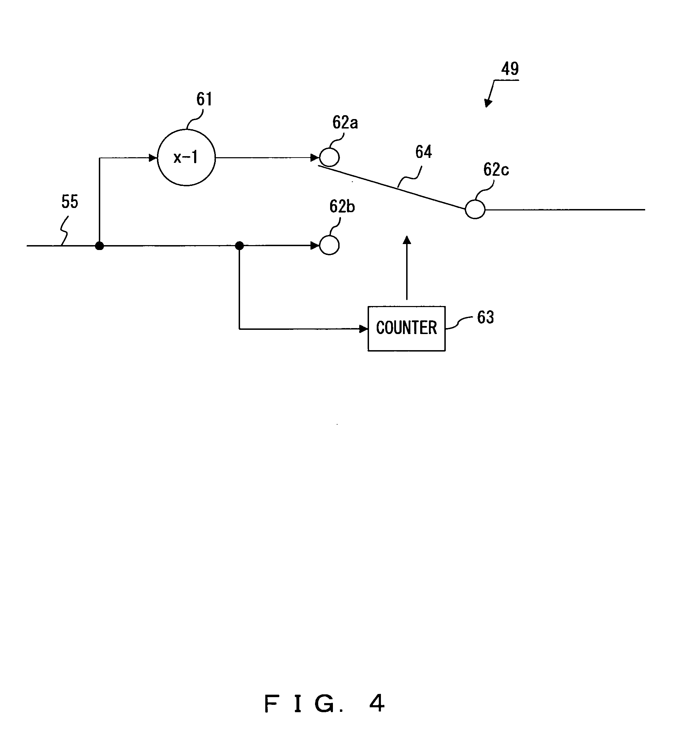

Fig. 4 is one example of the circuits of the sign inversion unit 49. The high-frequency sub-band signal 55 outputted from the down-sampler 48 is outputted to a terminal 62a after -1 is multiplied in a multiplier 61 and also is directly outputted to a terminal 62b.

The value of a counter 63 is counted up at every sample timing and a switch circuit 64 is alternately switched every time the counter value changes. As a result, when the switch circuit 64 is connected to the terminal 62a, a signal obtained by multiplying the high-frequency sub-band signal 55 by -1 is outputted from the output terminal 62c. When the switch circuit 64 is connected to the terminal 62b, the high-frequency sub-band signal 55 is outputted to the output terminal 62c as it is.

Thus, from the sign inversion unit 49, the high-frequency sub-band signal 56 whose sign is inverted every other sample is outputted. The switch circuit 64 can be realized, for example, by a selector circuit, a switch by a semiconductor device or the like.

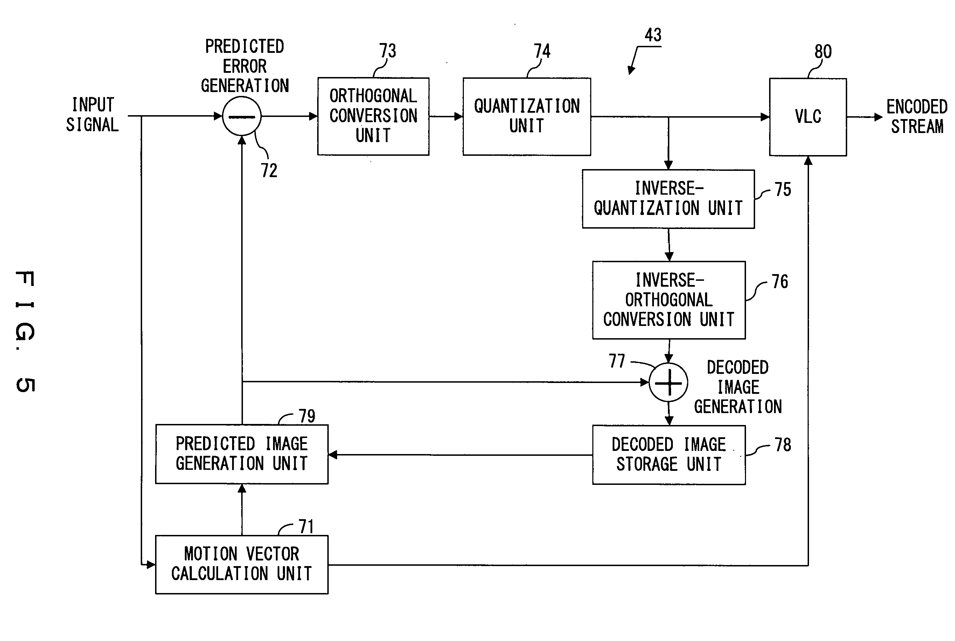

Fig. 5 is a block diagram of the encoding unit 43 (or 44). A motion vector calculation unit 71 calculates a motion vector on the basis of a reference image and outputs the calculation result to a predicted image generation unit 79 and a variable-length coder (VLC) 80. The predicted image generation unit 79 generates a predicted image using the calculation result of the motion vector and the reference image stored in the decoded image storage unit 78.

A subtracter 72 generates a predicted error being the difference between an input signal and the predicted image. An orthogonal conversion unit 73 applies discrete cosine transform to the predicted error. A quantization unit 74 quantizes the signal converted by the orthogonal conversion unit 73 to reduce the number of bits. The signal whose number of bits is reduced by the quantization unit 74 is converted to a variable-length code in a variable-length coder unit (VLC) 80 and is outputted as a low-frequency or high-frequency encoded stream.

The inverse-quantization unit 75 restores the number of bits of the quantized signal to the original number of bits and an inverse-orthogonal conversion unit 76 applies inverse-orthogonal conversion to the orthogonally converted signal. An adder 77 generates a decoded image on the basis of the predicted error signal obtained by inverse-quantization and inverse-orthogonal conversion and the predicted image. The generated decoded image is stored in a decoded image storage unit 78.

A predicted image generation unit 79 generates a predicted image on the basis of a reference image storage in the decoded image storage unit 78 and the motion vector. Then, in the subtracter 72, a predicted error is generated on the basis of the predicted image and an image to be encoded.

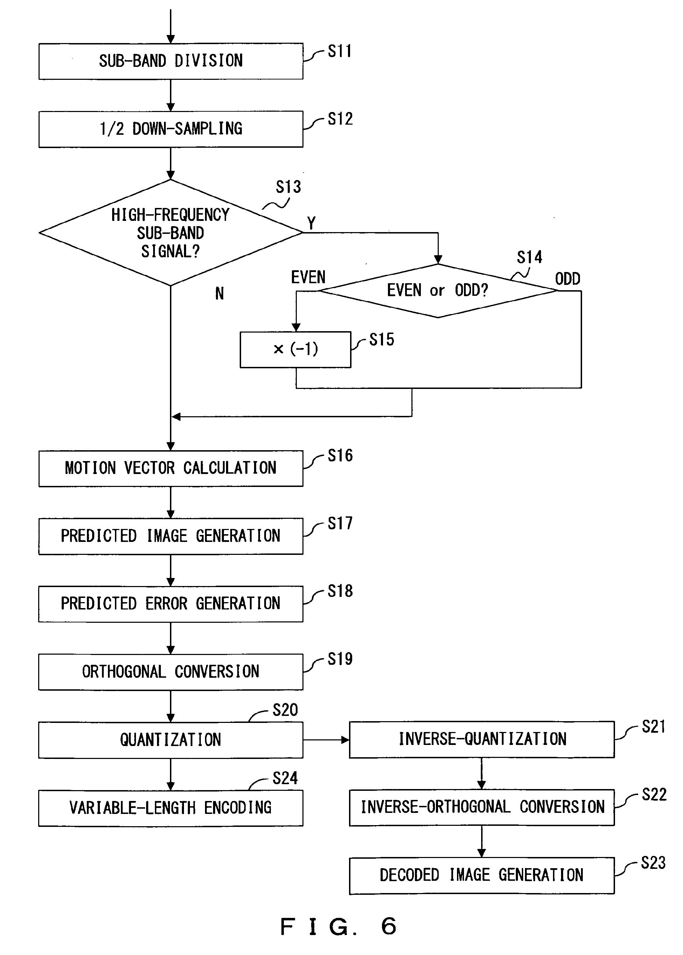

Fig. 6 is a flowchart of the encoding process. In the process illustrated in Fig. 6, the function of the sub-band dividing device 42 and the encoding units 43 and 44 illustrated in Fig. 1 is realized by software.

Low-frequency and high-frequency decomposition filtering processes are applied to the digital image signal 51 to perform sub-band division (S11).

Then, a 2:1 down-sampling process is performed (S12). Then, it is determined whether the sampled-down signal is a high-frequency sub-band or not (S13).

If it is a high-frequency sub-band (yes in S13), the process advances to step S14. If it is a low-frequency sub-band (no in S13), the process advances to step S16.

In step S14, it is determined whether the signal is the even-ordered or odd-ordered signal. If it is the even-ordered signal, the process advances to step S15. After -1 is multiplied to the high-frequency sub-band signal in step S15, the process advances to step S16. If it is determined to be the odd-ordered signal in step S14, the process advances to step S16.

In step S16, a motion vector is calculated on the basis of the reference image. Then, a predicted image is generated on the basis of the reference image and the motion vector (S17). Then, a predicted error is calculated on the basis of the difference between an image to be encoded and the predicted image. Then, an orthogonal conversion (discrete cosine conversion) is applied to the predicted error (S19). Then, the signal after the orthogonal conversion is quantized (S20). After the number of bits is reduced by the quantization, a variable-length encoding is applied to the signal (S24). At this moment inverse-quantization and inverse-orthogonal conversion are applied to the encoded image data (S21 and S22). A decoded image is generated on the basis of the error signal obtained by the inverse-orthogonal conversion and the predicted image (S23). The generated decoded image is stored in memory or the like. The decoded image stored in the memory is used as a reference image when a predicted image is generated.

According to the above-described first preferred embodiment, by cyclically multiplying a high-frequency sub-band signal by a negative value (for example, multiplying it by -1 every other sample), the frequency characteristic of the high-frequency sub-band signal can be inverted. Thus, high-frequency signal power can be reduced and low-frequency signal power can be increased. By increasing the low-frequency signal power of a high-frequency sub-band signal, the compression efficiency of an image can be improved.

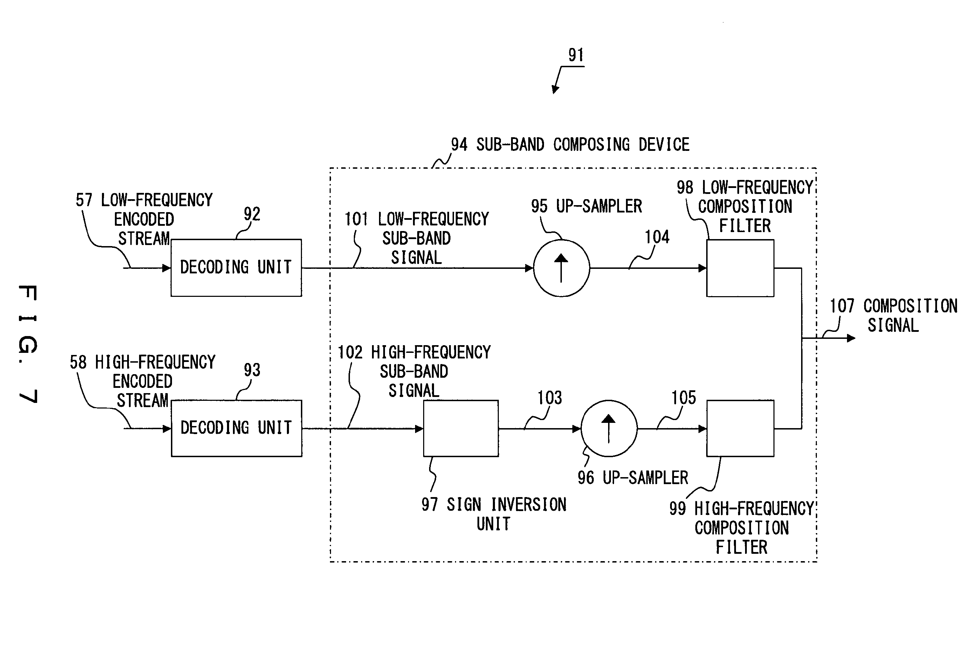

Fig. 7 is a configuration of an image decoding device 91 in the second preferred embodiment. An image decoding device 91 includes a decoding unit 92 for decoding the low-frequency encoded stream 57, a decoding unit 93 for decoding the high-frequency encoded stream 58 and a sub-band composing device 94 being the embodiment of an image band composing device.

The sub-band composing device 94 includes up-samplers 95 and 96, a sign inversion unit 97, a low-frequency composition filter 98 and a high-frequency composition filter 99.

The up-sampler 95 samples up a low-frequency sub-band signal outputted from the decoding unit 92 to double and outputs the signal to the low-frequency composition filter 98.

The sign inversion unit 97 cyclically multiplies a high-frequency sub-band signal outputted from the decoding unit 93 by a negative value (for example, multiplying the high-frequency sub-band signal by -1 every other sample). By multiplying the high-frequency sub-band signal 102 by -1 every other sample in the sign inversion unit 97, the sign of the signal multiplied by -1 on the image encoding device 41 side can be restored to the original sign. The signal 103 whose sign is inverted by the sign inversion unit 97 is sampled up double by the up-sampler 96 and outputted to the high-frequency composition filter 99.

The output signals of the low-frequency composition filter 98 and the high-frequency composition filter 99 are added and is outputted as a composition signal (decoded image signal) 107.

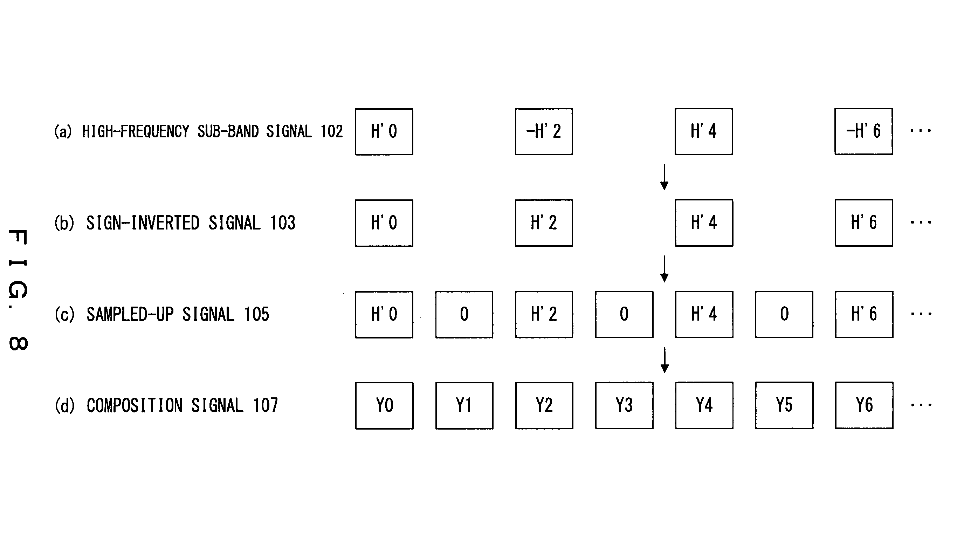

Fig. 8 explains signals in the second preferred embodiment. The row (a) in Fig. 8 indicates the high-frequency sub-band signal 102 outputted from the decoding unit 93. The decoded high-frequency sub-band signal 102 is the signal sampled down to 1/2 in the image encoding device 41. Since this high-frequency sub-band signal 102 is multiplied by -1 every other sample in the image encoding device 41, the even-ordered signals -H'2, -H'6, ... are negative values.

The row (b) in Fig. 8 indicates the output signal 103 of the sign inversion unit 97. By multiplying the signal by -1 every other sample by the sign inversion unit 97, the even-ordered signals H'2, H'6, ... are positive values.

The row (c) in Fig. 8 indicates the output signal 105 of the up-sampler 96. As to the signal 105 sampled up double, 0 is inserted in next to the first signal H'0 and the third signal H'2.

The row (d) in Fig. 8 indicates the composition signal 107 being the output signal of the sub-band composing device 94. The composition signal 107 is obtained by composing the output signal of the low-frequency composition filter 98 and the output signal of the high-frequency composition filter 99.

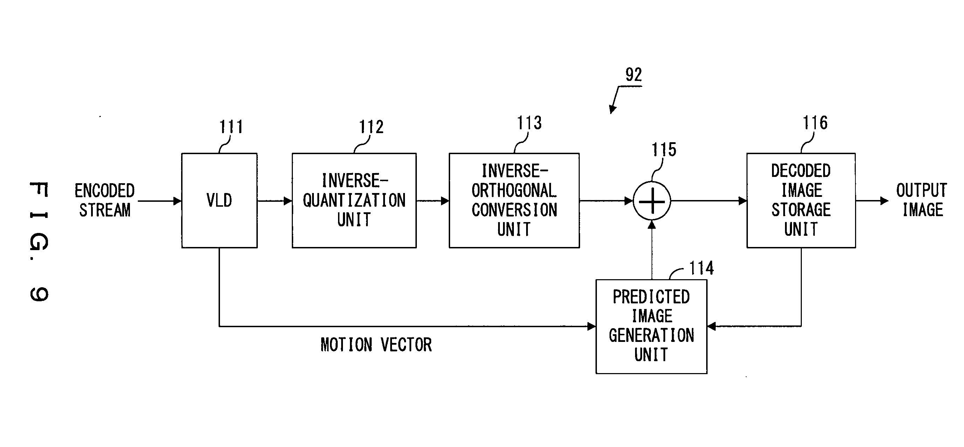

Fig. 9 is a block diagram of the decoding unit 92 (or 93). The decoding unit 92 includes a variable-length decoder (VLD) 111, an inverse-quantization unit 112, an inverse-orthogonal conversion unit 113, a predicted image generation unit 114, an adder 115 and a decoded image storage unit 116.

The variable-length decoder unit 111 decodes the variable-length encoded stream. The inverse-quantization unit 112 restores the number of bits of the decoded signal to the original number of bits and the inverse-orthogonal conversion unit 113 applies inverse-orthogonal conversion to the inversely quantized signal. The predicted image generation unit 114 generates a predicted image on the basis of the motion vector included in the encoded signal obtained from the variable-length decoder 111 and the reference image stored in the decoded image storage unit 116.

The adder 115 generates a decoded image by adding the predicted error outputted from the inverse-orthogonal conversion unit 113 to the predicted image generated by the predicted image generation unit 114. The generated decoded image is stored in the decoded image storage unit 116.

According to the above-described second preferred embodiment, the image can be decoded by multiplying the high-frequency encoded stream 58 that is cyclically multiplied by a negative value and encoded in the image encoding device 41 by a prescribed negative value (a value whose coefficient becomes the original value) in the same cycle as on the image encoding device side. Thus, the original digital image can be decoded from the encoded stream whose compression ratio is improved on the image encoding device 41 side.

According to the disclosed image encoding device, the compression ratio in the case where an image signal is decomposed into sub-bands and is encoded can be improved. In the image decoding device, the original digital image can be decoded from the encoded data whose compression ratio is improved.

The present invention is not limited to the above-described preferred embodiments and, for example, can be configured as follows.

(1) The present invention is not limited to the case where a digital image signal is decomposed into sub-bands in the horizontal direction and is applicable to a case where the signal is decomposed into sub-bands in the vertical direction. By consecutively connecting a plurality of sub-band division circuit, the present invention is not limited to the case where the signal is decomposed into two sub-bands of low-frequency and high-frequency sub-bands and is applicable to a case where each of the low-frequency and high-frequency sub-bands are decomposed into further two or more sub-bands.

(2) The negative value cyclically multiplied to a high-frequency sub-band can also be a negative integer or decimal value other than -1. The multiplying cycle is not limited to every another cycle or every four cycles and can be appropriately set according to a down-sampling ratio or before or after down sampling.

(3) The usage of the sub-band dividing device 42 and the sub-band composing device 94 is not limited for an image encoding/decoding device and can be used for the image band division/composing devices, respectively.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

**Claims**

1. An image encoding device, comprising:

   a sub-band division unit (45,46) for dividing a digital image signal into low-frequency and high-frequency sub-band signals;
   a down-sampling unit (47,48) for sampling down the low-frequency and high-frequency sub-band signals; and
   a multiplication unit (49) for cyclically multiplying the high-frequency sub-band signal before or after down-sampling by a negative value.

2. The image encoding device according to claim 1, wherein
   the down-sampling unit (47,48) samples down the low-frequency and high-frequency sub-band signals to 1/2 and
   the multiplication unit (49) multiplies the high-frequency sub-band signal sampled down to 1/2 by -1 every other sample.

3. The image encoding device according to claim 1, wherein
   the multiplication unit (49) multiplies the high-frequency sub-band signal before down-sampling by -1 every four samples and
   the down-sampling unit (47,48) samples down the high-frequency sub-band signal multiplied by -1 to 1/2.

4. The image encoding device according to claim 1, wherein
   the sub-band division unit (45,46) decomposes the digital image signal into two or more low-frequency or high-frequency sub-band signals.

5. An image decoding device for decoding a digital image signal from low-frequency and high-frequency sub-band signals, comprising:

   an up-sampling unit (95,96) for sampling up a high-frequency sub-band signal; and
   a multiplication unit (97) for cyclically multiplying the high-frequency sub-band signal before or after up-sampling by a negative value.

6. The image decoding device according to claim 5, wherein
   the up-sampling unit (95,96) samples up the high-frequency sub-band signal double and
   the multiplication unit (97) multiplies the sampled-up high-frequency sub-band signal by -1 every four samples.

7. The image decoding device according to claim 5, wherein
   the multiplication unit (97) multiplies the high-frequency sub-band signal by -1 every other sample and
   the up-sampling unit (95,96) samples up the high-frequency sub-band signal multiplied by -1 double.

8. An image band dividing device, comprising:

   a sub-band division unit (45,46) for dividing a digital image signal into low-frequency and high-frequency sub-band signals;
   a down-sampling unit (47,48) for sampling down the low-frequency and high-frequency sub-band signals; and
   a multiplication unit (49)for cyclically multiplying the high-frequency sub-band signal before or after down-sampling by a negative value.

9. The image band dividing device according to claim 8, wherein
   the down-sampling unit (45,46) samples down the low-frequency and high-frequency sub-band signals to 1/2 and
   the multiplication unit (49) multiplies the high-frequency sub-band signal sampled down to 1/2 by -1 every other sample.

10. The image band dividing device according to claim 8, wherein

the multiplication unit multiplies the high-frequency sub-band signal before down-sampling by -1 every four samples and
the down-sampling unit samples down the high-frequency sub-band signal multiplied by -1 to 1/2.

11. An image band composing device for composing low-frequency and high-frequency sub-band signals into a digital image, comprising:

an up-sampling unit for sampling up a high-frequency sub-band signal; and
a multiplication unit for cyclically multiplying the high-frequency sub-band signal before or after up-sampling by a negative value.

12. The image band composing device according to claim 11, wherein
the up-sampling unit samples up the high-frequency sub-band signal double and
the multiplication unit multiplies the sampled-up high-frequency sub-band signal by -1 every four samples.

13. The image band composing device according to claim 11, wherein
the multiplication unit multiplies the high-frequency sub-band signal by -1 every other sample and
the up-sampling unit samples up the high-frequency sub-band signal multiplied by -1 double.

14. The image band composing device according to claim 11, wherein
the multiplication unit multiplies the high-frequency sub-band signal before down-sampling by -1 every four samples and
the down-sampling unit samples down the high-frequency sub-band signal multiplied by -1 to 1/2.

15. An image encoding method for dividing a digital image signal into low-frequency and high-frequency sub-band signals and encoding the sub-band signals, comprising
sampling down a high-frequency sub-band signal; and
cyclically multiplying a high-frequency sub-band signal before or after down-sampling by a negative value.

16. The image encoding method according to claim 15, wherein
the high-frequency sub-band signal after down-sampling is multiplied by -1 every other sample.

17. An image decoding method of a digital image decomposed into low-frequency and high-frequency sub-band signal, comprising:

sampling up the high-frequency sub-band signal; and
cyclically multiplying a high-frequency sub-band signal before or after up-sampling by a negative value.

18. The image decoding method according to claim 17, wherein
the high-frequency sub-band signal after down-sampling is multiplied by -1 every other sample.

**F I G. 1**

41

42 SUB-BAND DIVIDING DEVICE

45 LOW-FREQUENCY DECOMPOSITION FILTER   47 DOWN-SAMPLER

51 DIGITAL IMAGE SIGNAL

52

54 LOW-FREQUENCY SUB-BAND SIGNAL

43 ENCODING UNIT

57 LOW-FREQUENCY ENCODED STREAM

46 HIGH-FREQUENCY DECOMOPOSITION FILTER   48 DOWN-SAMPLER

53

55

49 SIGN INVERSION UNIT

56

44 ENCODING UNIT

58 HIGH-FREQUENCY ENCODED STREAM

POWER

ANGULAR FREQUENCY

0          $\pi/2$

F I G.  2

FIG. 3

(a) DIGITAL IMAGE SIGNAL 51

| X0 | X1 | X2 | X3 | X4 | X5 | X6 | ··· |

(b) FILTER OUTPUT SIGNAL 53

| H0 | H1 | H2 | H3 | H4 | H5 | H6 | ··· |

(c) HIGH-FREQUENCY SUB-BAND SIGNAL 55

| H0 | | H2 | | H4 | | H6 | ··· |

(d) SIGN-INVERTED SIGNAL 56

| H0 | | −H2 | | H4 | | −H6 | ··· |

EP 2 146 508 A1

49

61

62a

64

62c

55

x-1

62b

COUNTER 63

F I G. 4

F I G. 5

SUB-BAND DIVISION — S11

1/2 DOWN-SAMPLING — S12

S13
HIGH-FREQUENCY SUB-BAND SIGNAL?

Y — S14 EVEN or ODD? ODD

EVEN

× (−1) — S15

N

MOTION VECTOR CALCULATION — S16

PREDICTED IMAGE GENERATION — S17

PREDICTED ERROR GENERATION — S18

ORTHOGONAL CONVERSION — S19

QUANTIZATION — S20

INVERSE-QUANTIZATION — S21

VARIABLE-LENGTH ENCODING — S24

INVERSE-ORTHOGONAL CONVERSION — S22

DECODED IMAGE GENERATION — S23

F I G. 6

14

F I G. 7

(a) HIGH-FREQUENCY SUB-BAND SIGNAL 102

(b) SIGN-INVERTED SIGNAL 103

(c) SAMPLED-UP SIGNAL 105

(d) COMPOSITION SIGNAL 107

F I G.  8

EP 2 146 508 A1

**F I G. 9**

ENCODED STREAM → VLD (111) → INVERSE-QUANTIZATION UNIT (112) → INVERSE-ORTHOGONAL CONVERSION UNIT (113) → ⊕ (115) → DECODED IMAGE STORAGE UNIT (116) → OUTPUT IMAGE

92

MOTION VECTOR

PREDICTED IMAGE GENERATION UNIT (114)

F I G. 1 0

POWER

0          π     ANGULAR FREQUENCY

F I G. 1 1

POWER

ANGULAR FREQUENCY

0    $\pi/2$    $\pi$

F I G.  1 2

POWER

0    π/2         ANGULAR FREQUENCY

F I G.  1 3

Europäisches
Patentamt

European
Patent Office

Office européen
des brevets

## EUROPEAN SEARCH REPORT

Application Number

EP 09 00 7471

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 757 973 A (WILKINSON JAMES HEDLEY [GB] ET AL) 26 May 1998 (1998-05-26) * abstract * * column 1, line 34 - column 2, line 41 * * column 5, line 6 - line 24 * * column 9, line 20 - line 31 * * column 9, line 37 - line 38 * * column 9, line 66 - column 10, line 38 * * claims; figures * | 1-18 | INV. H04N7/26 |
| X | US 2005/036633 A1 (JEON SEUNG-HUN [KR] ET AL JEON SEUNG-HUN [KR] ET AL) 17 February 2005 (2005-02-17) * abstract; figures * * paragraph [0025] * * paragraph [0034] * | 1-18 | |
| A,D | JP 04 326886 A (KOKUSAI DENSHIN DENWA CO LTD) 16 November 1992 (1992-11-16) * abstract * * figure 3 * | 1-18 | |
| | | | TECHNICAL FIELDS SEARCHED (IPC) |
| A | DA SILVA E A ET AL: "A DCT-BASED ALIASING CANCELLATION METHOD IN SUBBAND CODING" IEEE TRANSACTIONS ON CIRCUITS AND SYSTEMS FOR VIDEO TECHNOLOGY, IEEE SERVICE CENTER, PISCATAWAY, NJ, US, vol. 3, no. 5, 1 October 1993 (1993-10-01), pages 384-387, XP000414665 ISSN: 1051-8215 * abstract * * page 384, right-hand column, paragraph 3 - page 385, right-hand column, paragraph 1 * * figures 2,4 * * page 386, right-hand column, paragraph 2 * | 1-18 | H04N |

-/--

The present search report has been drawn up for all claims

| Place of search | Date of completion of the search | Examiner |
|---|---|---|
| Berlin | 12 November 2009 | Gries, Thomas |

Europäisches
Patentamt

European
Patent Office

Office européen
des brevets

# EUROPEAN SEARCH REPORT

Application Number

EP 09 00 7471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAOTO TANABE ET AL: "SUBBAND IMAGE CODING USING ENTROPY-CODED QUANTIZATION OVER NOISY CHANNELS"<br>IEEE JOURNAL ON SELECTED AREAS IN COMMUNICATIONS, IEEE SERVICE CENTER, PISCATAWAY, US,<br>vol. 10, no. 5, 1 June 1992 (1992-06-01), pages 926-943, XP000276096<br>ISSN: 0733-8716<br>* the whole document * | 1-18 | |
| A | AKANSU, ALI N. (ED.), SMITH, MARK J.T. (ED.): "Subband and Wavelet Transforms: Design and Applications The Springer International Series in Engineering and Computer Science)"<br>1 October 1995 (1995-10-01), SPRINGER , XP002554741<br>ISBN: 978-0792396451<br>* page 377 - page 378 * | 1-18 | |
| A | LIU C P ET AL: "A new subband coding technique using (JPEG) discrete cosine transform for image compression"<br>SYSTEM THEORY, 1996., PROCEEDINGS OF THE TWENTY-EIGHTH SOUTHEASTERN SY MPOSIUM ON BATON ROUGE, LA, USA 31 MARCH-2 APRIL 1996, LOS ALAMITOS, CA, USA,IEEE COMPUT. SOC, US, 31 March 1996 (1996-03-31), pages 317-321, XP010158596<br>ISBN: 978-0-8186-7352-8<br>* the whole document * | 1-18 | **TECHNICAL FIELDS SEARCHED      (IPC)** |

The present search report has been drawn up for all claims

| Place of search | Date of completion of the search | Examiner |
|---|---|---|
| Berlin | 12 November 2009 | Gries, Thomas |

EPO FORM 1503 03.82 (P04C01)

## ANNEX TO THE EUROPEAN SEARCH REPORT
## ON EUROPEAN PATENT APPLICATION NO.

EP 09 00 7471

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2009

| Patent document cited in search report | | Publication date | Patent family member(s) | | Publication date |
|---|---|---|---|---|---|
| US 5757973 | A | 26-05-1998 | JP | 4343577 A | 30-11-1992 |
| US 2005036633 | A1 | 17-02-2005 | KR | 20040086053 A | 08-10-2004 |
| | | | RU | 2244386 C2 | 10-01-2005 |
| | | | US | 2006115098 A1 | 01-06-2006 |
| JP 4326886 | A | 16-11-1992 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4369989 B
- JP H6343162 B
- JP H4326886 B